Europäisches Patentamt

(19) European Patent Office

Office européen des brevets

(11) EP 1 113 030 B1

(12) **EUROPEAN PATENT SPECIFICATION**

(45) Date of publication and mention
of the grant of the patent:
**28.07.2004 Bulletin 2004/31**

(51) Int Cl.[7]: **C08G 8/34**, C09D 11/10

(21) Application number: **00922971.7**

(22) Date of filing: **02.05.2000**

(86) International application number:
**PCT/JP2000/002918**

(87) International publication number:
**WO 2000/068289 (16.11.2000 Gazette 2000/46)**

(54) **PROCESS FOR PRODUCING PHENOL-MODIFIED ROSIN ESTER, PHENOL-MODIFIED ROSIN ESTER, AND USES THEREOF**

VERFAHREN ZUR HERSTELLUNG VON PHENOLMODIFIZIERTEM KOLOPHONIUMESTER, PHENOLMODIFIZIERTE KOLOPHONIUMESTER UND DEREN VERWENDUNG

PROCEDE DE PRODUCTION D'ESTER DE COLOPHANE MODIFIE PAR UN PHENOL, ESTER DE COLOPHANE MODIFIE PAR UN PHENOL ET UTILISATIONS CORRESPONDANTES

(84) Designated Contracting States:
**AT BE CH CY DE DK ES FI FR GB GR IE IT LI LU MC NL PT SE**

(30) Priority: **10.05.1999 JP 12798399**

(43) Date of publication of application:
**04.07.2001 Bulletin 2001/27**

(73) Proprietor: **Arakawa Chemical Industries, Ltd.**
**Osaka-shi, Osaka 541-0046 (JP)**

(72) Inventors:
• **SANO, Yoshikazu**
**Shijonawate-shi, Osaka 575-0061 (JP)**
• **TOMA, Itsuki**
**Takaichi-gun, Nara 634-0134 (JP)**

(74) Representative: **Müller-Boré & Partner**
**Patentanwälte**
**Grafinger Strasse 2**
**81671 München (DE)**

(56) References cited:
**EP-A1- 0 062 786      JP-A- 7 126 338**
**JP-A- 8 267 910       JP-A- 55 027 373**
**JP-A- 62 143 918      JP-A- 63 086 771**
**US-A- 5 708 078**

• **PATENT ABSTRACTS OF JAPAN vol. 012, no. 316 (C-524), 26 August 1988 (1988-08-26) & JP 63 086771 A (TOYO INK MFG CO LTD), 18 April 1988 (1988-04-18)**
• **PATENT ABSTRACTS OF JAPAN vol. 1995, no. 08, 29 September 1995 (1995-09-29) & JP 07 126338 A (TOYO INK MFG CO LTD), 16 May 1995 (1995-05-16)**
• **PATENT ABSTRACTS OF JAPAN vol. 004, no. 061 (C-009), 8 May 1980 (1980-05-08) & JP 55 027373 A (ARAKAWA CHEM IND CO LTD), 27 February 1980 (1980-02-27)**

**Description**

The present invention relates to a binder for printing inks containing a phenol-modified rosin ester, and a printing ink containing the binder.

Phenol-modified rosin esters are suitably used as a binder for printing inks.

Heretofore phenol-modified rosin esters have been prepared by carrying out a procedure for modifying rosin with phenol and a procedure for esterifying the rosin. Usually these procedures are conducted by (1) a process comprising modifying rosin with phenol and then esterifying the rosin with polyhydric alcohol or (2) a process comprising esterifying rosin with polyhydric alcohol and then modifying the rosin with phenol. The phenol-modifying procedure in the processes (1) and (2) is conducted by (a) a method comprising mixing a solution of resol phenol resin in an organic solvent with rosin or a polyhydric alcohol ester of rosin with heating at 220 to 270°C to modify the rosin with the phenol, and (b) a method comprising adding phenol and paraformaldehyde to fused rosin or polyhydric alcohol ester of rosin at 80 to 120°C, maintaining the mixture at the same temperature for a specific period in the presence of a catalyst for conversion to resol and heating the mixture to 200 to 250°C to modify the rosin with the phenol.

In the case of the method (a), however, a large amount of calcium hydroxide or like non-volatile metal compound is usually used as the catalyst for conversion to resol in preparing a resol phenol resin as the raw material so that a substantial amount of said compound remains in the phenol-modified rosin ester eventually obtained. Thus, printing inks containing the obtained rosin ester are unsatisfactory in properties, and there is a need for removing the remaining compound from the obtained resol phenol resin to prevent the printing ink from deterioration of properties. For this purpose, a water-washing procedure is indispensable. Therefore, it is essential to use an organic solvent in preparing a resol phenol resin in order to reduce the viscosity of the reaction mixture containing the resol phenol resin and to easily separate and remove the water used for washing.

A solution of resol phenol resin in an organic solvent is used in the phenol-modifying procedure by the method (a). Thus, when a large amount of the organic solvent solution of the resol phenol resin is supplied to the reaction system at one time, there is a risk of causing bump of organic solvent, and the temperature of reaction system may be lowered due to a high latent heat in vaporization of organic solvent. In view of this possibility, the resin solution should be added by degrees to the reaction system, involving not only a drawback of a prolonged time period taken in preparation of the resin, but also disadvantages of using an organic solvent in preparing a resol phenol resin and necessitating additional procedures and increased equipment costs for washing with water and for disposal of waste water.

On the other hand, in the case of the method (b), a phenol resin is made into resol concurrently with modification in the phenol-modifying procedure. Consequently the method (b) is free from disadvantages of additional procedures and increased equipment costs as in the method (a) and is economical. However, because of self-condensation of phenol resin and addition reaction of superfluous formalin with the rosin, the method (b) entails difficulty in obtaining a phenol-modified rosin ester having a high molecular weight and a high solubility among the properties required these days by binders for printing inks.

JP-A-61 229 779 describes an ink obtained by dissolving (A) a resin which is obtained by reacting (i) a rosin modified alkyd resin containing a carboxyl group prepared from rosin and/or a derivative thereof, a polyhydric alcohol and, if necessary, a polyfunctional carboxylic acid with (ii) a phenolic resin in the presence of (iii) an acidic catalyst and adjusted to $\leq 40$ acid value in (B) a solvent which comprises naphthene having $\leq -10°C$ flow point as a main component and has $\geq 200°C$ boiling point. JP-A-05 276 468 describes a rosin modified phenol resin obtained by thermally reacting rosin, a resol phenol resin obtained from $C_{10}$-$C_{20}$ alkylphenol, and a polyhydric alcohol in the presence of an acid catalyst. JP-A-53 101 257 describes a printing ink binder comprising a rosin-modified phenolic resin obtained by reacting (a) 100 parts by weight of rosins with (B) 1-20 parts by weight of $C_{10}$-$C_{50}$ higher aliphatic polybasic acid or its anhydride, (C) 10-120 parts by weight of the phenolic resin or its raw materials and (D) a polyhydric alcohol in an amount to give 0.6-1.2 equivalents of hydroxyl groups in (D) per the total carboxyl groups in (A) and (B) under heating, as an active constituent. US-A-5 708 078 describes a modified natural-resin acid ester comprising units of compounds of each of the groups A) natural resins and natural resin acids, B) aldehydes and aldehyde acetals, C) alcohols having at least two hydroxyl groups, D) metal salts and, if desired, compounds of one or more of the groups E) $\alpha,\beta$-ethylenically unsaturated carboxylic acids and their anhydrides, F) fatty acids and fatty acid esters, G) ethylenically unsaturated hydrocarbon resins, whereby the natural resin acid ester contains substantially no phenol or phenol aldehyde condensation products.

An object of the present invention is to provide a novel binder for printing inks containing a phenol-modified rosin ester which has overcome the above-mentioned prior art problems.

A further object of the present invention is to provide a printing ink containing the binder for printing inks.

Other objects and features of the present invention will become apparent from the following description.

According to the present invention, there is provided a binder for printing inks, which contains a phenol-modified rosin ester obtainable by reacting rosin with phenol, formaldehyde and polyhydric alcohol, wherein rosin or a polyhydric alcohol ester of rosin is reacted with a resol phenol resin which is obtainable by reacting phenol with formaldehyde in a closed reactor under an increased pressure in the presence of a base catalyst having a boiling point or a decomposition temperature in the range of not higher than 200°C and in the absence of a solvent, the phenol-modified rosin ester having a nitrogen residue content resulting from the base catalyst, measured by microanalysis of total nitrogen by a catalyst oxidation conversion method, in the range of 10 to 1,000 ppm.

According to the present invention, there are provided a binder for printing inks which binder contains said phenol-modified rosin ester and a printing ink containing said binder for printing inks.

The present inventor conducted extensive research to overcome the foregoing problems, directing attention to resol phenol resins useful as the raw material for a phenol-modified rosin ester contained in the binder for printing inks and found the following. When the above-specified resol phenol resin is used in the phenol-modified procedure by the method (a), a high molecular weight phenol-modified rosin ester having a high solubility in a solvent for inks can be prepared in a short time using relatively simple equipment. Furthermore, the obtained phenol-modified rosin ester is suitable as a binder for printing inks which binder has improved printability.

The present invention was completed based on these novel findings.

The resol phenol resin used gives the following various advantages.

The foregoing resol phenol resin is free of the non-volatile metal compound conventionally used as a catalyst for conversion to resol, so that the resol phenol resin need not be washed with water after preparation of the resol phenol resin. Consequently the resol phenol resin can be prepared without use of a solvent. Since the resol phenol resin is prepared in a closed reactor under an increased pressure, the formaldehyde and volatile base catalyst can be prevented from dissipating away from the reaction system and the conversion to resol can be conducted in a very short time. Further, the obtained resol phenol resin is substantially free of a solvent so that the resin can be added at a unlimited speed in the phenol-modifying procedure, whereby the phenol-modifying time can be pronouncedly shortened.

The phenol-modified rosin ester prepared using said resol phenol resin as the raw material can unexpectedly exhibit excellent properties for printability when used as a binder for printing inks, as compared with conventional phenol-modified rosin esters, presumably because of the foregoing advantages in the production and the residual volatile base catalyst.

In the present invention, rosin or a polyhydric alcohol ester of rosin is reacted with a specific resol phenol resin to give a phenol-modified rosin ester.

Rosins useful herein as the raw material for the phenol-modified rosin ester are various and include, for example, gum rosin, wood rosin, tall oil rosin, distilled rosin, hydrogenated rosin, polymerized rosin, disproportionated rosin, etc.

Examples of phenols useful herein as the raw material for the resol phenol resin are phenol, p-octylphenol, p-nonylphenol, p-dodecylphenol, p-butylphenol, bisphenol A, phenylphenol, p-aminophenol, p-ethylphenol, etc.

Formaldehydes useful herein as the raw material for the resol phenol resin include, for example, paraformaldehyde and an aqueous solution of formalin. The amount of the formaldehyde used is about 0.5 to about 3 moles (calculated as formaldehyde in the case of paraformaldehyde) per mole of phenol. When the amount of the formaldehyde used is less than 0.5 mole, the obtained phenol-modified rosin ester is rendered more soluble but is likely to lower in the molecular weight because the rosin ester contains considerable amounts of unreacted phenol and rosin residues. When the amount exceeds 3 moles, the obtained phenol-modified rosin ester has a high molecular weight but is likely to lower in the solubility. From these viewpoints, preferably the amount of formaldehyde ranges from the upper limit of not higher than 2.5 moles to the lower limit of not lower than 1.5 moles.

In the present invention, it is essential to use the resol phenol resin prepared by reacting phenol with formaldehyde in the presence of a volatile base catalyst.

There is no limitation on other reaction conditions for preparing the resol phenol resin than use of a volatile base as the catalyst. A preferred reaction temperature for conversion to resol is about 80 to about 200°C. At lower than 80°C, the reaction for conversion to resol proceeds at an exceedingly low rate, whereas at higher than 200°C, the reaction becomes difficult to control. From these viewpoints, a more preferred reaction temperature for conversion to resol is 160°C in the upper limit and 90°C in the lower limit.

When the reaction for conversion to resol is carried out in said reaction temperature range, usually the formaldehyde is vaporized and the water generated in the reaction is boiled, so that a pressure-resistant reactor is preferably used. Further, since the reaction is conducted in a closed reactor under an increased pressure, it is possible to prevent dissipation of phenol, formalin and volatile base catalyst from the reaction system. Thus the reaction time can be shortened by elevating the reaction temperature. For example, under an increased pressure of 1.0 MPa, the reaction can be performed at about 180°C. For example, the reaction conventionally taking a few hours can be completed only in 5 minutes. Moreover, since the viscosity of the resin is lowered at a high temperature, the reaction for conversion to resol can be suitably conducted without use of a solvent. In this case, the yield is further increased and the procedure is made more economical because the solvent inherently unwanted need not be used.

In the present invention, if the resol phenol resin to be used as the raw material has too low a molecular weight, the rosin ester prepared using the resol phenol resin is given a low solubility. If the resol phenol resin has too high a molecular weight, the rosin ester is given a low viscosity. Consequently, a resol phenol resin of about 500 to about 2,500 in molecular weight is preferable to use.

Specific examples of the volatile base catalyst are an aqueous solution of ammonia, hexamethylenetetramine and like ammonia-generating substances; methylamine, ethylamine, propylamine, butylamine, amylamine, hexylamine, heptylamine, octylamine, nonylamine, decylamine, undecylamine, dodecylamine, tridecylamine, tetradecylamine, pentadecylamine, cetylamine and like aliphatic primary amines; dimethylamine, diethylamine, dipropylamine, diisopropylamine, dibutylamine, diamylamine and like aliphatic secondary amines; trimethylamine, triethylamine and like aliphatic tertiary amines; allylamine, diallylamine, triallylamine and like aliphatic unsaturated amines; cyclopropylamine, cyclobutylamine, cyclopentylamine, cyclohexylamine and like alicyclic amines; benzylamine, dibenzylamine, tribenzylamine, diphenylamine, triphenylamine, $\alpha$-naphthylamine, $\beta$-naphthylamine and like aromatic amines; monoethanolamine, dimethylaminoethanol, diethanolamine, triethanolamine and like amino alcohols; etc. Also usable are, for example, ethylenediamine and like polyvalent amines; pyridine, piperidine, piperazine, pyrazine, aniline and so on. Further usable are salts of the above-exemplified compounds with weak acids and quaternary ammonium salts of the above-exemplified compounds. Among them, preferred are trimethylamine, diethylamine, triethylamine, monoethanolamine, dimethylaminoethanol, diethanolamine and the like from the viewpoints of catalytic activity, boiling point, safety and handleability.

The amount of the volatile base catalyst used is suitably determinable depending on the time involved in preparing the resol phenol resin, and the nitrogen residue content as described later among the properties of the obtained phenol-modified rosin ester.

The amount of the resol phenol resin used is usually at least 20 parts by weight per 100 parts of rosin or polyhydric alcohol ester of rosin. If less than 20 parts by weight of the resin is used, it would be difficult to obtain the contemplated high molecular weight rosin ester. On the other hand, the upper limit in the amount of resol phenol resin is usually not higher than 200 parts by weight per 100 parts of rosin or polyhydric alcohol ester of rosin from the standpoint of costs.

Examples of polyhydric alcohols useful as the component for esterification of rosin are glycerine, diglycerine, polyglycerine, pentaerythritol, dipentaerythritol, diethylene glycol, ethylene glycol, trimethylolethane, trimethylolpropane, etc. The amount of the polyhydric alcohol used is about 0.3 to about 1.5 in terms of the equivalent ratio (-OH equivalent of polyhydric alcohol/-COOH equivalent of rosin). The equivalent ratio of less than 0.3 makes it difficult to obtain the contemplated high molecular weight rosin ester, whereas more than 1.5 tends to impart a lower solubility to the obtained phenol-modified rosin ester. In view of the above, a preferred amount of the polyhydric alcohol used is about 0.5 to about 1.3 in terms of said equivalent ratio.

Examples of components which are optionally usable in preparing the phenol-modified rosin ester of the invention are petroleum resins such as those obtained from dicyclopentadiene or the like; linseed oil, soybean oil, tung oil, castor oil, rapeseed oil, cottonseed oil, coconut oil and like oils; oleic acid, stearic acid, lauric acid, isostearic acid, dimer acid and like fatty acids; etc. The amount of these optional components used is not higher than about 100 parts by weight per 100 parts by weight of rosin.

According to the present invention, the phenol-modified rosin ester which is contained in a binder for printing inks is prepared by reacting rosin with a resol phenol resin and polyhydric alcohol. The process for preparing the rosin ester can be properly selected from, for example, (1) a process comprising the steps of modifying rosin with a resol phenol resin and then esterifying the modified rosin with polyhydric alcohol, (2) a process comprising the steps of esterifying rosin with polyhydric alcohol to give a polyhydric alcohol ester of rosin, and then modifying the ester with a resol phenol resin, and (3) a process comprising the steps of charging into a reactor rosin, a resol phenol resin and polyhydric alcohol at the same time and reacting them.

The reaction conditions for preparing the phenol-modified rosin ester are not limited and include conventional reaction conditions. Generally, the reaction temperature for modifying the rosin or polyhydric alcohol ester of rosin with phenol is usually about 180 to about 270°C, and the reaction time is usually about 3 to about 5 hours. The temperature for esterification is usually about 230 to about 280°C and the reaction time is about 10 to about 16 hours. In said esterification procedure, an esterification catalyst can be used when so required.

The phenol-modified rosin ester used as a binder for printing inks of the present invention is in no way inferior in properties to the rosin esters prepared by the above-mentioned conventional method (a). According to the process of the invention for preparing the phenol-modified rosin ester, a high molecular weight and a highly soluble phenol-modified rosin ester can be easily prepared.

When the phenol-modified rosin ester is used as a binder for printing inks, the property values of the phenol-modified rosin ester greatly affect the properties of printing inks such as resistance to emulsification and resistance to smudging on printed paper sheets. Consequently the property values of the phenol-modified rosin ester should be carefully determined and some property values are desirably in the following ranges.

The phenol-modified rosin ester has desirably an acid value of 10 to 40 mg KOH/g, preferably 15 to 30 mg KOH/g, a weight average molecular weight of 10,000 to 500,000, preferably 20,000 to 200,000, calibrated with polystyrene standard samples, and a softening point (ring and ball method) of 140 to 190°C, preferably 150 to 180°C.

The phenol-modified rosin ester has a nitrogen residue content (as measured by microanalysis of total nitrogen by a catalyst oxidation conversion method) in the range of 10 to 1,000 ppm, preferably 30 to 500 ppm. The nitrogen residue content results from the volatile base catalyst used in preparing the resol phenol resin. Therefore, the phenol-modified rosin ester contains the residue in the original form of volatile base catalyst or in any form in which it exists as bonded to atoms in the molecules of the rosin ester.

The phenol-modified rosin ester has desirably a solubility (25°C) in a petroleum solvent (boiling point of 276 to 318°C, aniline point 69°C) in the range of at least 2 times, preferably at least 5 times. Useful petroleum solvents include, for example, "No.5 Solvent" (trade name, manufactured by Nippon Mitsubishi Oil Corporation) which is used as a solvent for inks. The solubility herein referred to is evaluated as follows. A 1.0 g quantity of the phenol-modified rosin ester is charged into a test tube, 2.0 g of No.5 Solvent is added to the test tube and the mixture is heated to 180°C to form a solution, followed by cooling to 25°C. Then, the solvent is further added when required, and the procedure is terminated when the solution has become turbid. The total amount (g) of the solvent per gram of the rosin ester (g/g) upon termination of procedure is indicated.

If the property values of the phenol-modified rosin ester are outside the above-specified ranges, the printing ink containing the rosin ester as a binder would exhibit poor printing properties. Hence the rosin ester of properties outside said ranges is undesirable.

The phenol-modified rosin ester prepared as outlined above is contained in the binder for printing inks according to the present invention. The printing ink containing the rosin ester as a binder can be used especially for offset printing and for planography printing (dry), letterpress printing, gravure printing or the like.

To prepare a binder for printing inks using the phenol-modified rosin ester of the invention, the rosin ester is dissolved in a petroleum solvent, drying oil or semi-drying oil with heating, and optionally a gelling agent is suitably added. In formulating a printing ink using said binder for printing inks, conventional pigments, non-aromatic solvents, drying oils, abrasion resistance improvers, dryers and like additives may be incorporated in the printing ink and milled.

The following examples are given to clarify the present invention in more detail. The parts and percentages used in the examples are all by weight.

Comparative Preparation Example 1

(Example wherein a conventional resol phenol resin is prepared without washing with water)

A reactor equipped with a stirrer, a reflux condenser having a water separator and a thermometer was charged with 4,000 parts of p-octylphenol, 1,800 parts of 92% paraformaldehyde and 2,000 parts of xylene. The mixture was heated to 60°C to form a solution. Then 72 parts of calcium hydroxide was added as a catalyst for conversion to resol. Thereafter the mixture was heated to 90°C to undergo a reaction for 4 hours, giving a solution of a resol phenol resin having a weight average molecular weight of 740 (solid content 65%).

Comparative Preparation Example 2

(Example wherein a conventional resol phenol resin is prepared by washing with water)

A predetermined amount of hydrochloric acid was added to 7,500 parts of the resol phenol resin solution prepared in Comparative Preparation Example 1 to adjust a pH of the contents to about 4. After washing the contents with 3,000 parts of warm water, the contents were left to stand for 2 hours to separate the oil layer, giving a solution of a resol phenol resin having a weight average molecular weight of 745 (solid content 65%).

Preparation Example 1

(Example wherein a resol phenol resin is prepared under an increased pressure)

A pressure-resistant reactor (1.5 MPa) equipped with a stirrer, an internal pressure meter, a reflux condenser having a water separator and a thermometer was charged with 4,000 parts of p-octylphenol and 1,300 parts of 92% paraformaldehyde. The mixture was heated to 80°C in a closed reactor under an increased pressure to form a solution, and 120 parts of triethylamine was added as a catalyst for conversion to resol. Then the mixture was heated to 145°C to undergo a reaction for 5 minutes, giving a solution of a resol phenol resin having a weight average molecular weight of 746 (solid content 95%).

Preparation Example 2

(Example wherein a resol phenol resin is prepared under an increased pressure)

The foregoing pressure-resistant reactor was charged with 4,000 parts of p-octylphenol and 1,050 parts of 92% paraformaldehyde. The mixture was heated to 80°C in a closed reactor under an increased pressure to form a solution, and 120 parts of triethylamine was added as a catalyst for conversion to resol. Then the mixture was heated to 125°C to undergo a reaction for 30 minutes, giving a solution of a resol phenol resin having a weight average molecular weight of 755 (solid content 95%).

Preparation Example 3

(Example wherein a resol phenol resin is prepared under an increased pressure)

The foregoing pressure-resistant reactor was charged with 4,000 parts of p-octylphenol and 1,050 parts of 92% paraformaldehyde. The mixture was heated to 80°C in a closed reactor under an increased pressure to form a solution, and 70 parts of trimethylamine was added as a catalyst for conversion to resol. Then the mixture was heated to 125°C to undergo a reaction for 30 minutes, giving a solution of a resol phenol resin having a weight average molecular weight of 782 (solid content 95%)

Reference Example 1

(Example wherein a resol phenol resin is prepared under an atmospheric pressure)

A reactor was charged with 4,000 parts of p-octylphenol and 1,050 parts of 92% paraformaldehyde. The mixture was heated to 80°C to form a solution, and 110 parts of dimethylaminoethanol was added as a catalyst for conversion to resol. Then the mixture was heated to 90°C to undergo a reaction for 4 hours, giving a solution of a resol phenol resin having a weight average molecular weight of 715 (solid content 95%).
Table 1 shows the weight average molecular weight of the resol phenol resins prepared in the above-described Preparation Examples, and the reaction time and the reaction temperature required in preparing the resol phenol resins.

Table 1

|  | Weight average molecular weight | Reaction time (minute) | Reaction temperature (°C) |
|---|---|---|---|
| Prep.Ex. 1 | 746 | 5 | 145 |
| Prep.Ex. 2 | 755 | 30 | 125 |
| Prep.Ex. 3 | 782 | 30 | 125 |
| Ref. Prep.Ex. 1 | 715 | 240 | 90 |
| Comp.Prep.Ex. 1 | 740 | 240 | 90 |
| Comp.Prep.Ex. 2 | 745 | 240 | 90 |

Example 1

1,800 parts of gum rosin was charged into a reactor equipped with a stirrer, a reflux condenser having a water separator and a thermometer and was fused with heating to 230°C in a nitrogen atmosphere. Then 170 parts of pentaerythritol was added and homogeneously mixed, and 4 parts of calcium hydroxide was added as an esterification catalyst. Thereafter the mixture was heated to 280°C. The water produced was collected by the reflux condenser having a water separator. A reaction was conducted at the same temperature for 8 hours and the reaction mixture was cooled to 250°C when the acid value reached not higher than 25 mg KOH/g. Subsequently 1,100 parts of the resol phenol resin solution prepared in Preparation Example 1 (solid content 95%) was added dropwise over a period of 4 hours at the same temperature. The mixture was held at the same temperature awhile. After it was confirmed that a predetermined resin viscosity was attained, a phenol-modified rosin ester was produced. The obtained rosin ester was found to have an acid value of 22 mg KOH/g, a weight average molecular weight of 43,000 (calibrated with polystyrene standard samples), a softening point of 169°C (ring and ball method), a nitrogen residue content of 200 ppm (measured by microanalysis of total nitrogen by catalyst oxidation conversion method, a measuring device used: "TN-10 Model" manufactured by Mitsubishi Chemical Corp.) and a solubility (25°C) of not less than 20 times when using "No.5 Solvent" (trade name, product of Nippon Mitsubishi Oil Corporation) as a petroleum hydrocarbon solvent (boiling point range 276 to 313°C, aniline point 69°C).

Example 2

1,800 parts of gum rosin was charged into the foregoing reactor and was fused with heating to 250°C in a nitrogen atmosphere. Subsequently 1,050 parts of the resol phenol resin solution prepared in Preparation Example 2 (solid content 95%) was added dropwise over a period of 3 hours. Then 170 parts of glycerine was added and the mixture was held at 250°C. The water produced was collected by the reflux condenser having a water separator. A reaction was conducted at the same temperature for 8 hours. After it was confirmed that the acid value reached not higher than 25 mg KOH/g, a phenol-modified rosin ester was obtained.

Example 3

1,800 parts of gum rosin was charged into the foregoing reactor and was fused with heating to 250°C in a nitrogen atmosphere. Subsequently 1,050 parts of the resol phenol resin solution prepared in Preparation Example 3 (solid content 95%) was added dropwise over a period of 3 hours. Then 170 parts of glycerine was added and the mixture was held at 250°C. The water produced was collected by the reflux condenser having a water separator. A reaction was conducted at the same temperature for 8 hours. After it was confirmed that the acid value reached not higher than 25 mg KOH/g, a phenol-modified rosin ester was obtained.

Reference Example 4

1,800 parts of gum rosin was charged into the foregoing reactor and was fused with heating to 250°C in a nitrogen atmosphere. Subsequently 1,050 parts of the resol phenol resin solution prepared in Reference Preparation Example 1 (solid content 95%) was added dropwise over a period of 3 hours. Then 170 parts of glycerine was added and the mixture was held at 250°C. The water produced was collected by the reflux condenser having a water separator. A reaction was conducted at the same temperature for 8 hours. After it was confirmed that the acid value reached not higher than 25 mg KOH/g, a phenol-modified rosin ester was obtained.

Example 5

1,800 parts of gum rosin was charged into the foregoing reactor and was fused with heating to 230°C in a nitrogen atmosphere. Subsequently 85 parts of pentaerythritol and 10 parts of glycerine were added and homogeneously mixed. The mixture was heated to 285°C. The water produced was collected by the reflux condenser having a water separator. A reaction was conducted at the same temperature for 3 hours. When the acid value reached 80 mg KOH/g, the mixture was cooled to 250°C. Subsequently 1,200 parts of the resol phenol resin solution prepared in Preparation Example 2 (solid content 95%) was added dropwise over a period of 4 hours. Then 80 parts of glycerine was added and the reaction was continued for about 6 hours. The water produced was collected by the reflux condenser having a water separator. After it was confirmed that the acid value reached not higher than 20 mg KOH/g, a phenol-modified rosin ester was obtained.

Comparative Example 1

1,800 parts of gum rosin was charged into the foregoing reactor and was fused with heating to 230°C in a nitrogen atmosphere. Subsequently 170 parts of pentaerythritol was added and homogeneously mixed. Then 4 parts of calcium hydroxide was added as an esterification catalyst and the mixture was heated to 280°C. The water produced was collected by the reflux condenser having a water separator. When the acid value reached not higher than 25 mg KOH/g, the mixture was cooled to 250°C. Subsequently 1,600 parts of the resol phenol resin solution prepared in Comparative Preparation Example 1 (solid content 65%) was added dropwise over a period of 12 hours. The xylene and water were collected by the reflux condenser having a water separator. On completion of dropwise addition of resol phenol resin solution, the mixture was held at the same temperature for 1 hour after which a phenol-modified rosin ester was obtained.

Comparative Example 2

1,800 parts of gum rosin was charged into the foregoing reactor and was fused with heating to 230°C in a nitrogen atmosphere. Subsequently 170 parts of pentaerythritol was added and homogeneously mixed. Then 4 parts of calcium hydroxide was added as an esterification catalyst and the mixture was heated to 280°C. The water produced was collected by the reflux condenser having a water separator. When the acid value reached not higher than 25 mg KOH/g, the mixture was cooled to 250°C. Subsequently 1,600 parts of the resol phenol resin solution prepared in Comparative Preparation Example 2 (solid content 65%) was added dropwise over a period of 12 hours. The xylene and water were collected by the reflux condenser having a water separator. On completion of dropwise addition of resol phenol resin solution, the mixture was held at the same temperature for 1 hour after which a phenol-modified rosin ester was obtained.

Comparative Example 3

1,800 parts of gum rosin was charged into the foregoing reactor and was fused with heating to 250°C in a nitrogen atmosphere. Subsequently 1,530 parts of the resol phenol resin solution prepared in Comparative Preparation Example 2 (solid content 65%) was added dropwise over a period of 7 hours. Then, 170 parts of glycerine was added and a reaction was conducted at the same temperature for 12 hours, giving a phenol-modified rosin ester. The xylene and water were collected by the reflux condenser having a water separator. The rosin ester was found to have an acid value of 24 mg KOH/g, a softening point of 175°C, a solubility (25°C) of 11.5 times in "No.5 Solvent" described above, and a weight average molecular weight of 65,000.

Comparative Example 4

1,800 parts of gum rosin was charged into the foregoing reactor and was fused with heating to 230°C in a nitrogen atmosphere. Subsequently 85 parts of pentaerythritol and 10 parts of glycerine were added and homogeneously mixed. The mixture was heated to 285°C. The water produced was collected by the reflux condenser having a water separator. A reaction was conducted at the same temperature for 3 hours. When the acid value reached 80 mg KOH/g, the mixture was cooled to 250°C. Subsequently 1,600 parts of the resol phenol resin solution prepared in Comparative Preparation Example 2 (solid content 65%) was added dropwise over a period of 7 hours, followed by addition of 80 g of glycerine. The reaction was continued for about 6 hours. The water produced was collected by the reflux condenser having a water separator. When the acid value reached not higher than 20 mg KOH/g, the reflux was terminated, and the mixture was held at the same temperature awhile. After it was confirmed that the predetermined resin viscosity was attained, a phenol-modified rosin ester was obtained.

Table 2 shows some properties of the phenol-modified rosin esters obtained in the Examples and Comparative Examples and the time taken in preparing the rosin ester.

Table 2

| | Acid value (mg KOH/g) | Softening point(℃) | Weight average Molecular weight |
|---|---|---|---|
| Ex. 1 | 22 | 169 | 43,000 |
| Ex. 2 | 24 | 175 | 65,000 |
| Ex. 3 | 24 | 174 | 60,000 |
| Ref. Ex.1 | 24 | 175 | 62,000 |
| Ex. 5 | 19 | 176 | 122,000 |
| Comp.Ex. 1 | 22 | 170 | 44,000 |
| Comp.Ex. 2 | 22 | 172 | 43,000 |
| Comp.Ex. 3 | 24 | 175 | 65,000 |
| Comp.Ex. 4 | 19 | 178 | 120,000 |

Table 2 (continued)

| | Nitrogen residue content (ppm) | Solubility (g/g) | Production time(hr) |
|---|---|---|---|
| Ex. 1 | 200 | 20< | 18 |
| Ex. 2 | 120 | 12.2 | 16 |
| Ex. 3 | 100 | 14 | 16 |
| Ref. Ex.1 | 150 | 12.0 | 16 |
| Ex. 5 | 160 | 20< | 20 |
| Comp.Ex. 1 | – | 18 | 24 |
| Comp.Ex. 2 | – | 20< | 24 |
| Comp.Ex. 3 | – | 11.5 | 24 |
| Comp.Ex. 4 | – | 20< | 27 |

Preparation of Printing Ink

A varnish was prepared by mixing 43 parts of each of the phenol-modified rosin esters prepared in Examples 1 to 5 and Comparative Examples 1 to 4 with 20 parts of linseed oil and 45 parts of "AF Solvent No.6" (trade name for a product of Nippon Mitsubishi Oil Corporation, hydrogenated petroleum hydrocarbon solvent having a boiling point of 302 to 321°C) at 180°C to form a solution. Then, 0.5 part of ethylacetoacetate aluminum diisopropylate (trade name "ALCH", product of Kawaken Fine Chemicals Co., Ltd.) was added to 100 parts of the varnish. The mixture was reacted at 190°C for 1 hour to give a varnish gel. A printing ink was prepared by milling the varnish gel with a three-roll mill using the following components in the proportions shown below:

| | |
|---|---|
| Crimson pigment | 18 parts |
| Foregoing varnish gel | 70-78 parts |
| "AF Solvent No.6" | 3-11 parts |
| Drier | 1 part |

The ink thus obtained was suitably adjusted to a tack value of 8.5 ± 0.5 and a flow value of 18 ± 0.5.

"Brilliant Carmine 6B" (trade name, a product of Toyo Ink Manufacturing Co., Ltd.) was used as the crimson pigment and cobalt naphthenate was used as the drier.

The obtained inks were tested for performance by the following methods.

Gloss: The ink (0.27 ml) was applied to the surface of a sheet of wood-free paper using "RI Tester" (trade name, product of Ishikawajima Sangyo Kikai Co., Ltd.) according to JIS K 5701. The obtained inked sheet sample was dried in the atmosphere at 25°C for 24 hours, and 60-degree specular gloss (%) was measured according to JIS Z 8741. Resistance to emulsification: The ink (3.9 ml) was applied to a kinetic emulsification tester (product of Nihon Rheology Kiki Co., Ltd.). Pure water was supplied at 200 r.p.m. and at a rate of 5 ml/min. The water content in the ink was measured by an infrared moisture meter. The emulsification ratio was calculated by the following equation.

$$\text{Emulsification ratio (\%)} = [(\text{weight of water in ink})/(\text{weight of water in ink} + \text{weight of ink})] \times 100$$

Resistance to misting: In an air-conditioned chamber adjusted to 25°C was the ink (2.7 ml) applied to a roll of the inkometer as defined in JIS K 5701, and the roll was manually turned to spread the ink uniformly over the roll. A blank sheet of paper was held at a position away by 10 cm from the roll while the roll was rotated at 1,200 r.p.m. for 2 minutes. The amount of ink scattered over the blank sheet of paper was visually evaluated according to the following criteria. A: Substantially no ink was scattered, B: A substantial amount of ink was scattered. A preferred ink is one scarcely scattered as is the case with the ink used in a printing machine actually operated.

Dryness degree: The ink (0.27 ml) was applied to the surface of a sheet of sulfate paper using "RI Tester" (trade name, product of Ishikawajima Sangyo Kikai Co., Ltd.) according to JIS K 5701. Another sheet of sulfate paper was superposed on the inked surface of sulfate paper sheet and was wound on a rotary drum of a C-type dryness tester (product of Toyoseiki Seisakusho Co., Ltd.) in such a manner that the paper sheet superposed on the inked paper sheet externally existed over the drum. A weight and a compression gear were slowly placed on the external sheet, and then the drum was rotated. The drying time (hr) is equal to a period of time taken until substantially no trace of the gear is left on the external sheet.

Resistance to smudging on printed paper sheets: Using a light offset printing press (product of Ryobi Ltd., trade name "2800 CD"), 1,000 paper sheets were printed while the water-supplying dial was fully throttled until immediately before the printed sheet became smudged. The degree of smudging on printed paper sheets was visually evaluated according to the following criteria. A: No smudging; B: Slightly smudged; C: Markedly smudged.

Table 3 shows the results of performance tests.

Table 3

|  | Gloss (%) | Emulsification ratio (%) | Resistance to misting | Drying time (hr) | Resistance to smudging on printed paper sheets |
|---|---|---|---|---|---|
| Ex. 1 | 70 | 40 | B | 5 | A |
| Ex. 2 | 60 | 38 | A | 4.5 | A |
| Ex. 3 | 61 | 40 | A | 4.5 | A |
| Ref. Ex. 1 | 60 | 42 | A | 4.5 | A |
| Ex. 5 | 75 | 30 | A | 4.5 | A |
| Comp.Ex.1 | 35 | 65 | A | 4.5 | C |
| Comp.Ex.2 | 62 | 52 | B | 5 | A |
| Comp.Ex.3 | 58 | 40 | A | 4.5 | B |
| Comp.Ex.4 | 70 | 35 | A | 4.5 | A |

The phenol-modified rosin ester of Comparative Example 1 was prepared using the resol phenol resin of Comparative Preparation Example 1 (without washing with water) obtained in the presence of the conventional metal compound catalyst. As apparent from Table 3, a printing ink containing this rosin ester as a binder was inferior in properties such as gloss, resistance to emulsification (emulsification ratio) and resistance to smudging on printed paper sheets. Further, the phenol-modified rosin esters of Comparative Examples 2 to 4 were prepared using the resol phenol resin of Comparative Preparation Example 2 (involving washing with water) obtained in the presence of the conventional metal compound as a catalyst. Printing inks containing the rosin esters as a binder were not fully satisfactory in printing properties. On the other hand, when the phenol-modified rosin esters of Examples 1 to 5 according to the invention were used, evidently the obtained printing inks containing these rosin esters as a binder were remarkably superior in printing properties.

The resol phenol resin useful as the raw material of the binder for printing units according to the presend invention can be prepared in an exceedingly shorter time, and the reaction for conversion to resol can be carried out without use of a solvent. The equipment for preparing a phenol-modified rosin ester can be simplified and the rosin ester can be prepared in a markedly short time. The phenol-modified rosin ester has the same constants for resins as the phenol-modified rosin esters prepared by conventional processes, but can exhibit excellent properties when used as a binder for printing inks.

## Claims

1. A binder for printing inks, which contains a phenol-modified rosin ester obtainable by reacting rosin with phenol, formaldehyde and polyhydric alcohol, wherein rosin or a polyhydric alcohol ester of rosin is reacted with a resol phenol resin which is obtainable by reacting phenol with formaldehyde in a closed reactor under an increased pressure in the presence of a base catalyst having a boiling point or a decomposition temperature in the range of not higher than 200°C and in the absence of a solvent, the phenol-modified rosin ester having a nitrogen residue content resulting from the base catalyst, measured by microanalysis of total nitrogen by a catalyst oxidation conversion method, in the range of 10 to 1,000 ppm.

2. The binder for printing inks according to claim 1, wherein the phenol-modified rosin ester has an acid value of 10 to 40 mg KOH/g.

3. The binder for printing inks according to claim 1, wherein the phenol-modified rosin ester has a weight average molecular weight of 10,000 to 500,000 as calibrated with polystryrene standard samples.

4. The binder for printing inks according to claim 1, wherein the phenol-modified rosin ester has a softening point, measured by the ring and ball method, of 140 to 190°C.

5. The binder for printing inks according to claim 1, wherein the phenol-modified rosin ester has a solubility at 25°C in a petroleum hydrocarbon solvent having a boiling point of 276 to 313°C and aniline point 69°C, in the range of at least 2 g per g.

6. A printing ink containing the binder for printing inks as defined in anyone of claims 1 to 5.

## Revendications

1. Liant pour encres d'imprimerie, qui contient un ester de colophane modifié par un phénol, pouvant être obtenu en faisant réagir la colophane avec un phénol, le formaldéhyde et un alcool polyhydrique, dans lequel la colophane ou un ester d'alcool polyhydrique et de colophane est mis en réaction avec une résine résol phénol pouvant être obtenue par réaction du phénol avec le formaldéhyde dans un réacteur fermé, sous pression, en présence d'un catalyseur base ayant un point d'ébullition ou une température de décomposition n'excédant pas 200°C et en l'absence de solvant, l'ester de colophane modifié par un phénol ayant une teneur en azote résiduel due au catalyseur base, mesurée par microanalyse de l'azote total selon une technique de conversion par oxydation catalytique, de l'ordre de 10 à 1.000 ppm.

2. Liant pour encres d'imprimerie selon la revendication 1, dans lequel l'ester de colophane modifié par un phénol a un indice d'acide de 10 à 40 mg de KOH/g.

3. Liant pour encres d'imprimerie selon la revendication 1, dans lequel l'ester de colophane modifié par un phénol a un poids moléculaire moyen en poids de 10.000 à 500.000 d'après l'étalonnage à l'aide d'échantillons standards de polystyrène.

4. Liant pour encres d'imprimerie selon la revendication 1, dans lequel l'ester de colophane modifié par un phénol a un point de ramollissement mesuré par la technique de l'anneau et de la bille, de 140 à 190°C

5. Liant pour encres d'imprimerie selon la revendication 1, dans lequel l'ester de colophane modifié par un phénol a une solubilité à 25°C dans un solvant d'hydrocarbure de pétrole ayant un point d'ébullition de 276 à 313°C et un point d'aniline de 69°C, de l'ordre d'au moins 2 g par gramme.

6. Encre d'imprimerie contenant le liant pour encres d'imprimerie selon l'une quelconque des revendications 1 à 5.

**Patentansprüche**

1. Bindemittel für Druckfarben, welches einen Phenol-modifizierten Harzester enthält, der durch Umsetzen von Kolophonium mit Phenol, Formaldehyd und mehrwertigem Alkohol erhältlich ist, wobei Kolophonium oder ein mehrwertiger Alkoholester von Kolophonium mit einem Resolphenolharz umgesetzt wird, welches durch Umsetzen von Phenol mit Formaldehyd in einem geschlossenen Reaktor unter einem erhöhten Druck in der Gegenwart eines basischen Katalysators mit einem Siedepunkt oder einer Zersetzungstemperatur in dem Bereich von nicht höher als 200°C und in der Abwesenheit eines Lösungsmittels erhältlich ist, wobei der Phenol-modifizierte Harzester einen Stickstoffrestgehalt, der von dem basischen Katalysator resultiert, gemessen durch Mikroanalyse von Gesamtstickstoff mittels eines katalytischen Oxidationsumwandlungsverfahren, in dem Bereich von 10 bis 1.000 ppm aufweist.

2. Bindemittel für Druckfarben gemäß Anspruch 1, wobei der Phenol-modifizierte Harzester einen Säurewert von 10 bis 40 mg KOH/g aufweist.

3. Bindemittel für Druckfarben gemäß Anspruch 1, wobei der Phenol-modifizierte Harzester ein Gewichtsmittel des Molekulargewichts von 10.000 bis 500.000, wie mit Polystyrolstandardproben kalibriert, aufweist.

4. Bindemittel für Druckfarben gemäß Anspruch 1, wobei der Phenol-modifizierte Harzester einen Erweichungspunkt, gemessen durch die Ring-und-Kugel-Methode, von 140 bis 190°C aufweist.

5. Bindemittel für Druckfarben gemäß Anspruch 1, wobei der Phenol-modifizierte Harzester eine Löslichkeit bei 25°C in einem Petrolkohlenwasserstoff-Lösungsmittel mit einem Siedepunkt von 276 bis 313°C und Anilinpunkt von 69°C in dem Bereich von mindestens 2 g pro g aufweist.

6. Druckfarbe, enthaltend das Bindemittel für Druckfarben, wie in einem der Ansprüche 1 bis 5 definiert.